# EUROPÄISCHE PATENTSCHRIFT

(11) **EP 2 428 303 B1**
(45) Veröffentlichungstag und Bekanntmachung des Hinweises auf die Patenterteilung: **10.01.2018**
(21) Anmeldenummer: 11007424.2
(22) Anmeldetag: 13.09.2011
(51) Int. Cl.: B23K 11/24, H01F 27/30, H01F 38/08, B23K 11/11

(54) **Transformator für eine Schweisszange**
Transformer for welding tongs
Transformateur pour une pince de soudage

(30) Priorität: 13.09.2010 DE 102010045079
(43) Veröffentlichungstag der Anmeldung: 14.03.2012
(73) Patentinhaber: BlitzRotary GmbH, 78199 Bräunlingen (DE)
(72) Erfinder: Ahlers, Klaus, 28307 Bremen (DE); Frese, Hans-Joachim, 28865 Lilienthal (DE)
(74) Vertreter: Samson & Partner Patentanwälte mbB

(56) Entgegenhaltungen:
- DE-A1-102007 001 234
- DE-B- 1 060 987
- DE-C- 683 645
- JP-A- 6 151 211
- US-A- 1 320 894
- US-A- 2 683 790

## Beschreibung

Die Erfindung betrifft einen Transformator für eine Schweißzange eines Widerstandsschweißgerätes, mit Primärwicklung, Sekundärwicklung und Kern. Daneben betrifft die Erfindung eine Schweißzange und ein Widerstandsschweißgerät mit einem entsprechenden Trafo.

Widerstandsschweißgeräte für die industrielle Fertigung, z. B. im Automobilbau, sind typischerweise mit einer Punktschweißzange nach Art einer Trafozange ausgerüstet. Dabei ist ein Schweißtransformator Bestandteil der Schweißzange. Die Zuleitungen zur Schweißzange sind deshalb relativ dünn. Nachteil dieser Bauform ist das hohe Gewicht der Trafozange durch den integrierten Schweißtransformator. Für hochautomatisierte industrielle Anwendungen ist das Gewicht der Schweißzange von untergeordneter Bedeutung, da dort Schweißroboter eingesetzt werden.

Im Werkstattbereich werden die Schweißzangen manuell bedient. In den letzten Jahrzehnten wurden deshalb Widerstandsschweißgeräte mit sogenannten Kabelzangen verwendet. Dabei ist der Schweißtransformator quasi-stationär vorgesehen, während die von der Bedienungsperson geführte Schweißzange über ein Hochstromkabel mit dem Schweißtransformator verbunden ist. Die Kabelzange ist wegen des fehlenden Schweißtransformators gegenüber der Trafozange relativ leicht. Unhandlich ist aber das relativ dicke Hochstromkabel.

Im Werkstattbereich sind die Anforderungen an die Stromstärke gestiegen. Gefordert werden inzwischen mehr als 10.000 A. Entsprechend schwer sind die Hochstromkabel zwischen Kabelzange und Schweißtransformator. Es wird deshalb nach Lösungen gesucht, Schweißzangen für Widerstandsschweißgeräte, insbesondere zur Verwendung im Werkstattbereich so auszubilden, dass die Bewegung der Schweißzange auf einfache Weise möglich ist.

Ein Schweißtransformator für ein Widerstandsschweißgerät ist der DE 683 645 entnehmbar. Eine Sekundärwicklung besteht aus Metallschalen, in die Primärwicklungen eingeschoben sind und die die Primärwicklungen umschließen. Ein Eisenkern ist durch Umwickeln der ringförmig ausgebildeten Primär-Sekundär-Wicklungen mittels eines Eisendrahtes oder Bandes hergestellt.

Einen Schweißtransformator zeigt auch die DE 1 060 987. Primärwicklungen liegen in kammerartig ausgebildeten Sekundärwicklungen. Innerhalb der derart gebildeten Windungen befindet sich ein Kern aus lamelliertem Eisenblech.

Die DE 10 2007 001 234 A1 betrifft eine Halbleiterbaugruppe zum Anschluss an eine Schweißtransformatorwicklung. Erkennbar ist eine Sekundärwicklung mit einem Windungselement aus einem massiven Kupferblock. Mehrere aufeinander folgende Windungselemente der Sekundärwicklung bilden Zwischenräume, in denen Spulenelemente der Primärwicklung angeordnet sind.

Der erfindungsgemäße Transformator soll möglichst kompakt und/oder leicht ausgebildet sein. Daneben soll der Transformator kostengünstig herstellbar sein. Schließlich sieht die erfindungsgemäße Lösung auch eine Schweißzange mit integriertem Transformator - Trafozange - vor, bei der der Transformator möglichst kompakt und/oder leicht ausgebildet ist. Die Merkmale des erfindungsgemäßen Transformators sind dem Anspruch 1 entnehmbar.

Gemäß der Erfindung ist zur Bildung der Sekundärwicklung ein (erster) Block aus leitfähigem Werkstoff vorgesehen. Der Block weist eine Ausnehmung oder Vertiefung zur Aufnahme der Primärwicklung auf. Außerdem weist der Block eine Öffnung zur Aufnahme zumindest eines Abschnitts des Kerns auf. Der Block ist so ausgebildet, dass er zugleich die Sekundärwicklung darstellt. Aufgrund der angegebenen Ausnehmung, Vertiefung und Öffnung ist die Sekundärwicklung im Verhältnis zur Primärwicklung außen. Ganz innen, nämlich auch innerhalb der Primärwicklung, liegt der Kern. Die Öffnung für den Kern ist vorzugsweise konzentrisch zur Ausnehmung oder Vertiefung angeordnet und erstreckt sich insbesondere vollständig durch den Block hindurch.

Nach einem weiteren Gedanken der Erfindung bildet die Ausnehmung bzw. Vertiefung für die Primärwicklung eine ringförmige Wanne im Block, ähnlich einem halbierten Torus, mit einer Schnittfläche senkrecht zur Achse. Dabei kann die "Ringform" auch nahezu rechteckig sein. In die derart gestaltete Ausnehmung ist die Primärwicklung eingelassen und dort auch vergossen. Der die Sekundärwicklung bildende Block ist somit zugleich Form für die Vergussmasse der Primärwicklung. Daneben ist der Block Kühlkörper für Sekundärwicklung und Primärwicklung und tragendes Teil zur Aufnahme aller weiteren Bestandteile, vorzugsweise auch schon während der Fertigung des Transformators. Zur elektrischen Trennung von Windungsteilen kann der Block Schlitze aufweisen. Diese können vor dem Vergießen der Primärwicklung mit Kleber oder auf andere Weise abgedichtet werden.

Nach einem weiteren Gedanken der Erfindung ist der Block aus Aluminium oder einer Aluminiumlegierung gefertigt, vorzugsweise gefräst. Vorteilhafterweise ist der Block mit Kühlkanälen, insbesondere für eine Wasserkühlung, versehen. Die Kühlkanäle können durch Fräsen oder Bohren in den Block eingearbeitet sein.

Nach einem weiteren Gedanken der Erfindung bildet der Block zwei Sekundär-Teilwicklungen, welche vorzugsweise parallel geschaltet sind. Entsprechend kann der Block innerhalb jeder Sekundär-Teilwicklung eine eigene Ausnehmung bzw. Vertiefung für eine korrespondierende Primär-Teilwicklung aufweisen, ebenso eine Öffnung für einen Kern-Abschnitt.

Nach einem weiteren Gedanken der Erfindung weist jede Sekundär-Teilwicklung eine Windung oder weniger, insbesondere etwa eine Halb- bis Dreiviertel-Windung auf. Vorzugsweise liegt ein elektrischer Abgriff ungefähr zwischen einer halben bis Dreiviertelwindung. Gemäß der Erfindung ist zur Bildung der Sekundärwicklung mindestens ein weiterer Block vorgesehen, sodass zumindest ein erster und ein zweiter Block vorhanden sind, jeweils zur Bildung einer oder mehrerer Sekundär-Teilwicklungen und zur Aufnahme einer oder mehrerer Primär-Teilwicklungen. Bei zwei Sekundär-Teilwicklungen und Primär-Teilwicklungen je Block ergeben sich so insgesamt vier Sekundär-Teilwicklungen und vier Primär-Teilwicklungen. Vorzugsweise sind dann auch vier Öffnungen zur Aufnahme von Kern-Abschnitten vorgesehen. Gemäß der Erfindung sind zwei im Wesentlichen E-förmige Blöcke zueinander benachbart angeordnet, wobei Schenkel des ersten Blocks parallel und entgegengesetzt zu Schenkeln des zweiten Blocks gerichtet sind. Definiert man ein "E" als Körper mit Basis, zwei äußeren Schenkeln und einem mittleren Schenkel, so ist jede Ausnehmung bzw. Vertiefung zwischen Basis, äußerem Schenkel und mittlerem Schenkel gebildet, ebenso jede Öffnung für den Kern. Entsprechend weist der Block zwei Kern-Öffnungen auf, welche sich vollständig durch den Block hindurch erstrecken.

Die äußeren Schenkel weisen an ihren Enden quergerichtete und zum mittleren Schenkel weisende Fortsätze auf. Entsprechend weist der mittlere Schenkel quergerichtete Fortsätze zu den äußeren Schenkeln auf, wobei diese Fortsätze mit einer gemeinsamen Außenfläche versehen sind. Der Strom fließt von dieser gemeinsamen Außenfläche in den mittleren Schenkel, über die Basis und in die beiden äußeren Schenkel. Die quergerichteten Fortsätze der äußeren Schenkel sind vorzugsweise am Stromfluss nicht beteiligt, dienen aber der Vervollständigung der Gussform für das Vergießen der Primärwicklung. Zwischen den Fortsätzen der äußeren Schenkel und den Fortsätzen des mittleren Schenkels verläuft als galvanische Trennung ein schmaler Schlitz, welcher zum Vergießen der Primärwicklung durch geeignete nicht leitende Werkstoffe abgedichtet werden kann. Gemäß der Erfindung ist ein äußerer Schenkel des ersten Blocks mit dem hierzu benachbarten äußeren Schenkel des zweiten Blocks elektrisch verbunden. Auch ist der andere äußere Schenkel des ersten Blocks mit dem anderen äußeren Schenkel des zweiten Blocks elektrisch verbunden, während die mittleren Schenkel voneinander elektrisch getrennt sind, ebenso von der jeweils gegenüberliegenden Basis. Gemäß der Erfindung liegen die äußeren Schenkel des ersten Blocks an den äußeren Schenkeln des zweiten Blocks an. Außerdem weisen die mittleren Schenkel einen Abstand zueinander auf. Die Blöcke können miteinander verschraubt oder auf andere Weise gegeneinander gepresst sein.

Vorteilhafterweise sind die Blöcke mit Kühlkanälen, insbesondere für eine Wasserkühlung versehen. Dabei können die beiden Blöcke im Bereich von Kühlkanälen aneinander anliegen, sodass Kanalverbindungen bestehen. Zur besseren Abdichtung können im Bereich der Kanalverbindungen O-Ringe vorgesehen sein.

Nach einem weiteren Gedanken der Erfindung ist als Kern ein Schnittbandkern in O-Form oder Rechteckform vorgesehen. Bei Verwendung von zwei Blöcken mit je zwei Sekundär-Teilwicklungen erstreckt sich der Kern durch beide Blöcke hindurch, liegt aber größtenteils innerhalb der Blöcke. Vorzugsweise ist der Kern aus amorphem Eisen gebildet. Alternativ kann auch ein Kern aus gestapelten Blechen, sowie in UI-Form vorgesehen sein.

Nach einem weiteren Gedanken der Erfindung sind sekundärseitig Scheiben-Dioden vorgesehen, welche zwischen Keilflächen gehalten sind. Üblicherweise werden Scheiben-Dioden mit Druckfedern an Elektroden angepresst. Ein derartiger Aufbau ist aufwendig. Erfindungsgemäß sind hier die Scheiben-Dioden zwischen Keilflächen gehalten. Mindestens eine der beiden Keilflächen ist Bestandteil eines beweglichen Keils. Die erforderliche Anpresskraft wird erzeugt in Abhängigkeit von der Bewegung des Keils in seine Endposition.

Vorteilhafterweise liegt eine erste Scheiben-Diode an einer insbesondere festen ersten Keilfläche an, während eine zweite Scheiben-Diode an einer insbesondere festen zweiten Keilfläche anliegt und zwischen den Scheiben-Dioden ein insbesondere verschiebbarer Keil (mit eigenen Keilflächen) vorgesehen ist. Die beiden Scheiben-Dioden und die insgesamt sich ergebenden vier Keilflächen liegen Sandwich-artig übereinander. Zum Beaufschlagen beider Scheiben-Dioden muss nur der mittig sitzende Keil bewegt werden.

Die Anordnung der sekundärseitigen Scheiben-Dioden zwischen Keilflächen ist auch als eigenständige Erfindung verwendbar, insbesondere ohne die in besonderer Weise ausgebildete Sekundärwicklung. Vorzugsweise ist aber eine gemeinsame Anwendung vorgesehen.

Nach einem weiteren Gedanken der Erfindung sind freie Enden der mittleren Schenkel der Blöcke mit je einer Diode elektrisch verbunden, während die äußeren Schenkel der Blöcke elektrisch zusammengeführt sind zu einer Mittelanzapfung. Entsprechend sind die sekundärseitigen Teil-Wicklungen aller Blöcke parallel zueinander geschaltet.

Weitere Merkmale der Erfindung ergeben sich aus der Beschreibung im Übrigen und aus den Ansprüchen. Vorteilhafte Ausführungsformen der Erfindung werden nachfolgend anhand von Zeichnungen näher erläutert. Es zeigen:
- Fig. 1: eine perspektivische Darstellung eines Transformators mit Scheiben-Dioden,
- Fig. 2: eine perspektivische, gegenüber Fig. 1 um 180° gedrehte Darstellung des Transformators mit Anschlüssen für Primärwicklungen,
- Fig. 3: eine auseinandergezogene Darstellung des Transformators gemäß Fig. 2,
- Fig. 4: einen der beiden Blöcke des Transformators in perspektivischer Darstellung (Vorderansicht),
- Fig. 5: den Block gemäß Fig. 4 in perspektivischer Darstellung (Rückenansicht),
- Fig. 6: den zweiten Block des Transformators in perspektivischer Darstellung (Vorderansicht),
- Fig. 7: den Block gemäß Fig. 6 in perspektivischer Darstellung (Rückenansicht),
- Fig. 8: ein Schaltbild des Transformators mit Dioden.

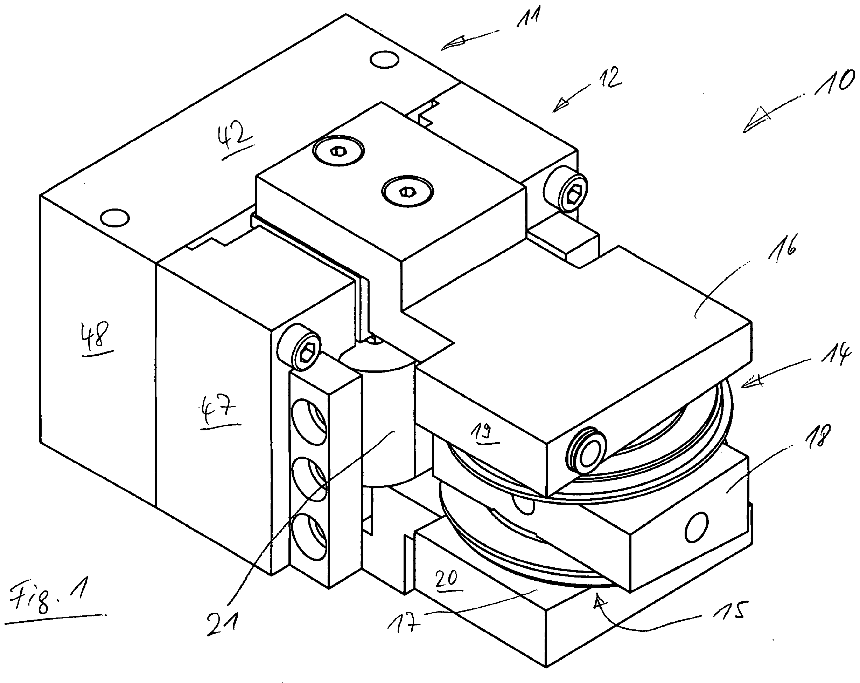

Gemäß Fig. 1 weist ein Transformator 10 für eine Punktschweißzange eines Widerstandsschweißgerätes eine blockförmige Sekundärwicklung auf. Diese besteht hier aus einem ersten (hinteren) Block 11 und einem zweiten (vorderen) Block 12.

An die Sekundärwicklung angeschlossen ist eine Gleichrichterschaltung 13, hier bestehend aus Scheiben-Dioden, nämlich einer ersten (oberen) Scheiben-Diode 14 und einer zweiten (unteren) Scheiben-Diode 15. Die Dioden 14, 15 sind gehalten zwischen keilförmigen Elektroden 16, 17. Zusätzlich ist zwischen den Elektroden ein Keil 18 vorgesehen. Dieser kann in nicht gezeigter Weise mittels einer geeigneten Verschraubung gegen einen an Seitenflächen 19, 20 der Elektroden 16, 17 anliegenden Spannbalken (nicht gezeigt) gezogen werden. Dadurch verringern sich die für die Dioden 14, 15 zur Verfügung stehenden Zwischenräume bzw. der Anpressdruck gegen die Elektroden 16, 17 erhöht sich. Den Dioden 14, 15 zugewandte Keilflächen desselben Zwischenraums sind jeweils parallel zueinander ausgerichtet. Die obere Elektrode 16 ist elektrisch mit dem zugewandten zweiten Block 12 verbunden, die untere Elektrode 17 mit dem ersten Block 11.

In Fig. 1 noch erkennbar ist ein Teil eines Kerns 21. Dieser ist ringförmig bzw. nahezu rechteckig ausgebildet und erstreckt sich mit seinen Kern-Abschnitten bzw. Schenkeln durch beide Blöcke 11, 12 hindurch.

Jeder Block 11, 12 ist aus Aluminium gefräst und bildet zwei Sekundär-Teilwicklungen 22, 23 bzw. 24, 25. Zugleich nimmt jeder Block in entsprechenden Ausnehmungen 26, 27 bzw. 28, 29 großflächiger Vorderseiten zwei Primär-Teilwicklungen 30, 31 bzw. 32, 33 auf. Zu diesem Zweck sind die Ausnehmungen 26 bis 29 nach Art einer nahezu rechteckig umlaufenden Wanne ausgebildet. In diese umlaufende Rechteckform kann die jeweilige Primär-Teilwicklung 30 bis 33 eingelegt und darin vergossen werden. Jeder Block 11, 12 ist somit zugleich Sekundärwicklung und Vergussform für die Primärwicklung.

Innerhalb der umlaufenden Rechteckform der Ausnehmungen 26 bis 29 sind in den Blöcken 11, 12 durchgehende Öffnungen 34 bis 37 für den Kern 21 vorgesehen. Die beiden Blöcke 11, 12 sind so ausgebildet und aneinander angelegt, dass die Öffnungen 34, 35 des ersten Blocks 11 mit den Öffnungen 36, 37 des zweiten Blocks 12 fluchten.

Jeder Block 11, 12 weist zusätzlich zu den Ausnehmungen und Öffnungen noch Schlitze 38, 39 bzw. 40, 41 auf. So ergibt sich eine E-förmige Gestalt eines jeden Blocks, nämlich mit einer Basis 42, einem mittleren Schenkel 43 und äußeren Schenkeln 44, 45. Dadurch wird der für den Strom zur Verfügung stehende Weg definiert. In jedem Block 10, 11 fließt der Strom von einem freien Ende 46 des mittleren Schenkels 43 zur Basis 42 und von dort in den äußeren Schenkel 44 - eine Sekundär-Teilwicklung -, sowie in den anderen äußeren Schenkel 45 - andere Sekundär-Teilwicklung. Der Strom wird an großen äußeren Seitenflächen 47, 48 der Schenkel abgeleitet, und zwar an ein nicht gezeigtes Transformator-Chassis.

Jede Elektrode 16, 17 ist mit dem freien Ende 46 eines der mittleren Schenkel 43 verbunden.

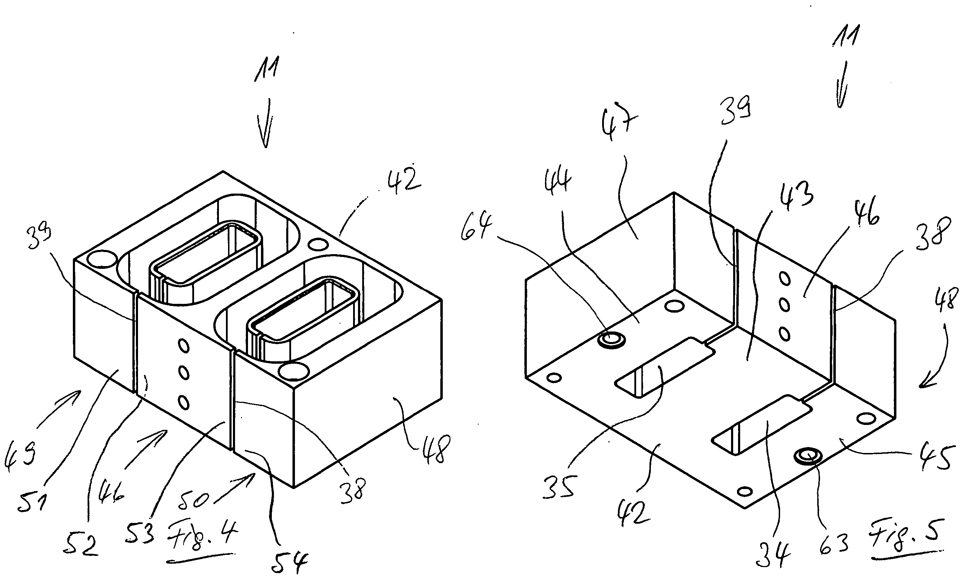

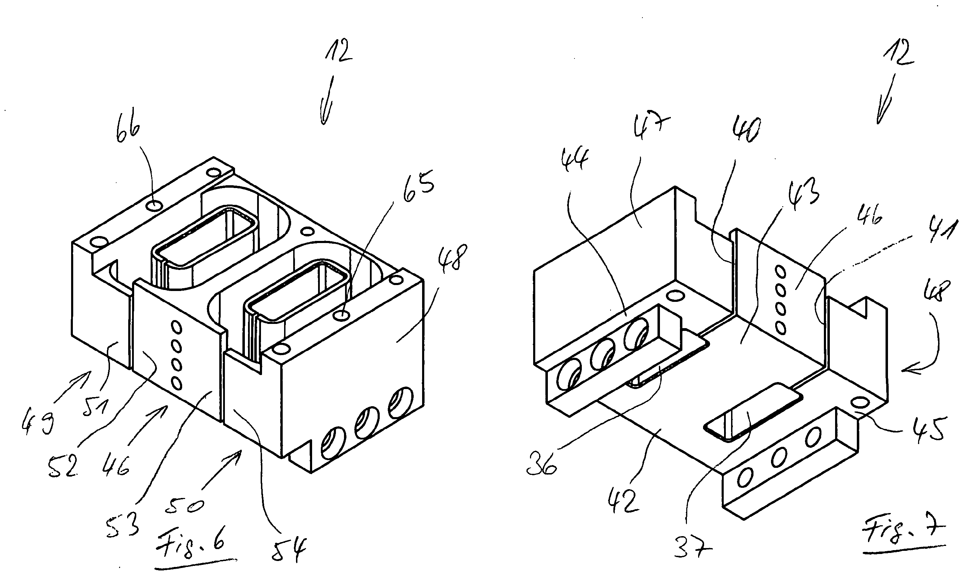

An ihren freien Enden 46, 49, 50 weisen die Schenkel quergerichtete Fortsätze 51, 52, 53, 54 auf, siehe Fig. 4 und 6, zwischen denen die Schlitze 38 bis 41 gebildet sind. Die Fortsätze 51 bis 54 sind für die elektrische Funktion von untergeordneter Bedeutung und dienen in erster Linie der Bildung der Gussform bzw. Ausnehmungen 26 bis 29 für die jeweilige Primär-Teilwicklung 30 bis 33. Vor dem Einsetzen und Vergießen der Primär-Teilwicklungen 30 bis 31 in die Ausnehmungen 26 bis 29 werden die Schlitze 38 bis 41 vorzugsweise mit einem nicht leitenden Werkstoff abgedichtet.

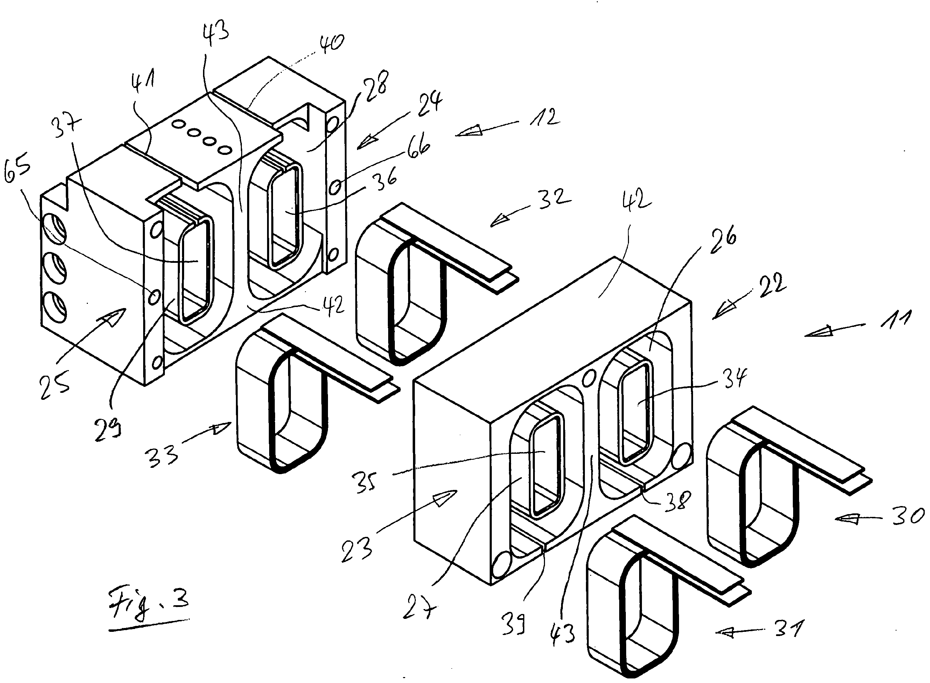

Die beiden E-förmigen Blöcke liegen verdreht aneinander an, siehe insbesondere Fig. 3. Während der mittlere Schenkel 43 des Blocks 11 in Fig. 3 abwärts gerichtet ist, erstreckt sich der mittlere Schenkel 43 des Blocks 12 aufwärts. Dabei sind zwischen den beiden mittleren Schenkeln 43 der beiden Blöcke 11, 12 und zwischen den Basen 42 Abstände vorgesehen, während die äußeren Schenkel gemäß Fig. 1 jeweils aneinander anliegen und so elektrisch miteinander verbunden sind. Dadurch erstreckt sich jede Sekundär-Teilwicklung über etwa eine Dreiviertel-Windung (oder etwas weniger).

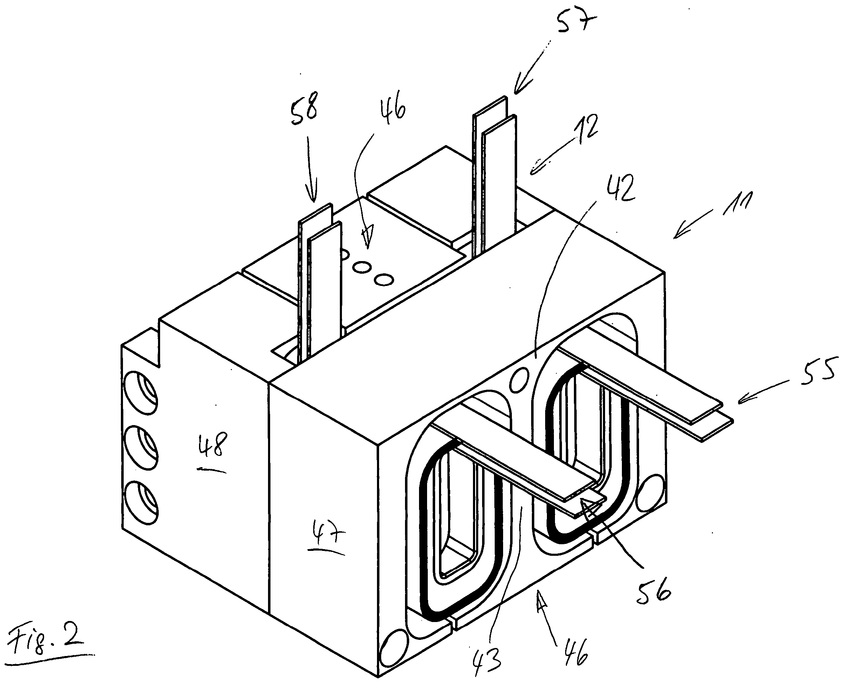

Fig. 2 zeigt die aneinander anliegenden Blöcke 11, 12 und herausgeführte Leiterpaare 55, 56, 57, 58 der Primär-Teilwicklungen 30 bis 33.

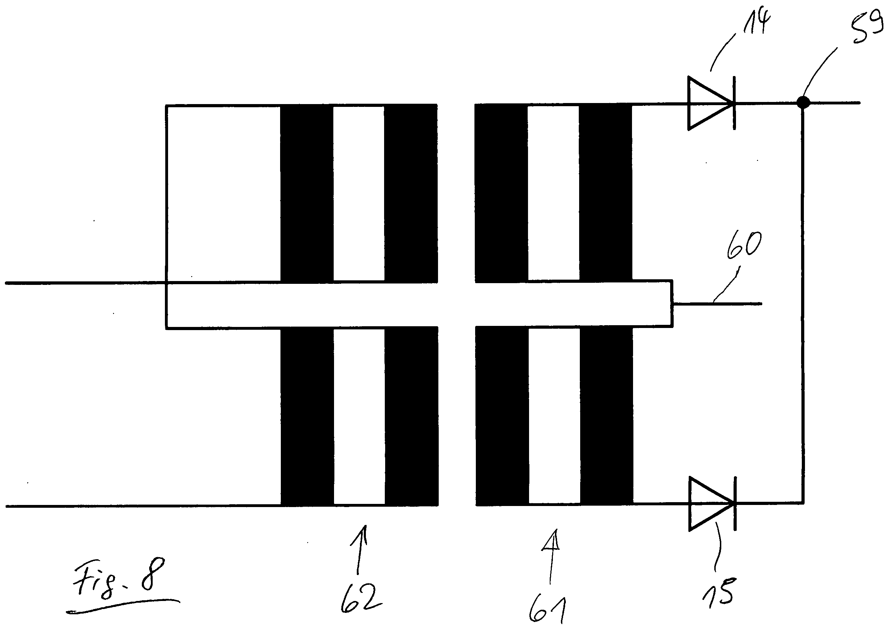

Der Keil 18 ist elektrisch leitend und definiert die elektrische Verbindung 59 zwischen den Dioden 14, 15, siehe insbesondere Schaltbild in Fig. 8. Eine Mittelanzapfung 60 einer durch die Teilwicklungen 22 bi 25 gebildeten Sekundärwicklung 61 ist gebildet durch die Seitenflächen 47, 48, welche jeweils mit dem nicht gezeigten Chassis des Transformators verbunden sind. Die Mittelanzapfung 60 kann somit aus dem Chassis herausgeleitet werden.

Die Sekundär-Teilwicklungen 22 bis 25 der Sekundärwicklung 61 sind gemäß Fig. 8 alle parallel zueinander geschaltet, während die Primär-Teilwicklungen 30 bis 33 der PrimärWicklung 62 paarweise parallel und von Paar zu Paar in Reihe geschaltet sind.

Die beiden Blöcke 11, 12 sind wassergekühlt und weisen Kühlkanäle 63, 64, 65, 66 sowie ggf. weitere, nicht gezeigte Kühlkanäle auf. Dabei strömt die Kühlflüssigkeit auch von Block zu Block. Hierfür fluchten die Kühlkanäle 63, 66 bzw. 64, 65 miteinander. Auch weisen die Kühlkanäle 63, 64 Ausfräsungen für O-Ringe als Dichtungen auf. Zuleitungen der Kühlkanäle sind nicht gezeigt.

Der Transformator ist insbesondere zur Verwendung in der Trafozange eines Widerstandsschweißgerätes geeignet und vorgesehen. Andere Anwendungen sind aber nicht ausgeschlossen. Besonders vorteilhaft sind die kompakte Bauform und die kostengünstige Herstellung durch die eingegossene Primärwicklung und eine hierfür die Gussform bildende Sekundärwicklung.

Bevorzugt verwendbar und geeignet im Zusammenhang mit dem beschriebenen Transformator 10 ist die Halterung der Scheiben-Dioden 14, 15 zwischen Keilen. Diese besondere Dioden-Halterung ist überall dort verwendbar, wo Scheiben-Dioden eingesetzt werden.

| | | | |
|---|---|---|---|
| 10 | Transformator | 37 | Öffnung |
| 11 | erster Block | 38 | Schlitz |
| 12 | zweiter Block | 39 | Schlitz |
| 13 | Gleichrichterschaltung | 40 | Schlitz |
| 14 | erste Scheiben-Diode | 41 | Schlitz |
| 15 | zweite Scheiben-Diode | 42 | Basis |
| 16 | keilförmige Elektrode | 43 | mittlerer Schenkel |
| 17 | keilförmige Elektrode | 44 | äußerer Schenkel |
| 18 | Keil | 45 | äußerer Schenkel |
| 19 | Seitenfläche | 46 | freies Ende |
| 20 | Seitenfläche | 47 | Seitenfläche |
| 21 | Kern | 48 | Seitenfläche |
| 22 | Sekundär-Teilwicklung | 49 | freies Ende |
| 23 | Sekundär-Teilwicklung | 50 | freies Ende |
| 24 | Sekundär-Teilwicklung | 51 | Fortsatz |
| 25 | Sekundär-Teilwicklung | 52 | Fortsatz |
| 26 | Ausnehmung | 53 | Fortsatz |
| 27 | Ausnehmung | 54 | Fortsatz |
| 28 | Ausnehmung | 55 | Leiterpaar |
| 29 | Ausnehmung | 56 | Leiterpaar |
| 30 | Primär-Teilwicklung | 57 | Leiterpaar |
| 31 | Primär-Teilwicklung | 58 | Leiterpaar |
| 32 | Primär-Teilwicklung | 59 | elektrische Verbindung |
| 33 | Primär-Teilwicklung | 60 | Mittelanzapfung |
| 34 | Öffnung | 61 | Sekundärwicklung |
| 35 | Öffnung | 62 | Primärwicklung |
| 36 | Öffnung | | |

## Patentansprüche

1. Transformator (10), insbesondere für eine Schweißzange eines Widerstandsschweißgerätes, mit Primärwicklung (62), Sekundärwicklung (61) und Kern (21), mit folgenden Merkmalen:
a) zur Bildung der Sekundärwicklung (61) ist mindestens ein Block (11, 12) aus leitfähigem Werkstoff vorgesehen,
b) der Block (11, 12) weist eine Ausnehmung (26 bis 29) oder Vertiefung zur Aufnahme der Primärwicklung (62) auf,
c) der Block (11, 12) weist eine Öffnung (34 bis 37) zur Aufnahme zumindest eines Abschnitts des Kerns (21) auf,
d) zur Bildung der Sekundärwicklung (61) ist mindestens ein weiterer Block (11, 12) vorgesehen, so dass zumindest ein erster und ein zweiter Block (11, 12) vorhanden sind, jeweils zur Bildung einer oder mehrerer Sekundär-Teilwicklungen (22 bis 25) und zur Aufnahme einer oder mehrerer Primär-Teilwicklungen (30 bis 33),
**gekennzeichnet durch** folgende Merkmale:
e) zwei im Wesentlichen E-förmige Blöcke (11, 12) sind zueinander benachbart angeordnet, wobei Schenkel (43 bis 45) des ersten Blocks (11) parallel und entgegengesetzt zu Schenkeln (43 bis 45) des zweiten Blocks (12) gerichtet sind,
f) ein äußerer Schenkel (44, 45) des ersten Blocks (11) ist mit dem hierzu benachbarten äußeren Schenkel (44, 45) des zweiten Blocks (12) elektrisch verbunden, während der andere äußere Schenkel des ersten Blocks (11) mit dem anderen äußeren Schenkel des zweiten Blocks (12) elektrisch verbunden ist, und während der mittlere Schenkel (43) des ersten Blocks (11) vom mittleren Schenkel (43) des zweiten Blocks (12) elektrisch getrennt ist,
g) die äußeren Schenkel (44, 45) des ersten Blocks (11) liegen an den äußeren Schenkeln (44, 45) des zweiten Blocks (12) an, wobei die mittleren Schenkel (43) einen Abstand zueinander aufweisen, ebenso zu den Basen (42), welche die Schenkel (43 bis 45) miteinander verbinden.

2. Transformator nach Anspruch 1, **dadurch gekennzeichnet, dass** die Ausnehmung (26 bis 29) für die Primärwicklung (62) eine ringförmige Wanne bildet.

3. Transformator nach Anspruch 1 oder 2, **dadurch gekennzeichnet, dass** der Block (11, 12) aus Aluminium oder einer Aluminiumlegierung gefertigt, vorzugsweise gefräst ist.

4. Transformator nach Anspruch 1 oder einem der weiteren Ansprüche, **dadurch gekennzeichnet, dass** der erste und/oder der zweite Block (11, 12) je zwei Sekundär-Teilwicklungen (22 bis 25) bilden, welche vorzugsweise parallel geschaltet sind.

5. Transformator nach Anspruch 4, **dadurch gekennzeichnet, dass** jede Sekundär-Teilwicklung (22 bis 25) eine Windung oder weniger, insbesondere etwa eine Dreiviertel-Windung oder weniger aufweist.

6. Transformator nach Anspruch 1 oder einem der weiteren Ansprüche, **dadurch gekennzeichnet, dass** die beiden Blöcke (11, 12) Kühlkanäle (63 bis 66) insbesondere für eine Wasserkühlung aufweisen.

7. Transformator nach Anspruch 1 oder einem der weiteren Ansprüche, **dadurch gekennzeichnet, dass** die beiden Blöcke (11, 12) im Bereich von Kühlkanälen (63 bis 66) aneinander anliegen, sodass Kanalverbindungen bestehen.

8. Transformator nach Anspruch 1 oder einem der weiteren Ansprüche, **dadurch gekennzeichnet, dass** als Kern (21) ein Schnittbandkern in O-Form oder Reckteckform vorgesehen ist.

9. Transformator nach Anspruch 1 oder einem der weiteren Ansprüche, **dadurch gekennzeichnet, dass** jeder Block (11, 12) zwei Sekundär-Teilwicklungen (22 bis 25) bildet und zwei Primär-Teilwicklungen (30 bis 33) aufnimmt.

10. Transformator nach Anspruch 1 oder einem der weiteren Ansprüche, **gekennzeichnet durch** sekundärseitige Scheiben-Dioden (14, 15), welche zwischen Keilflächen gehalten sind.

11. Transformator nach Anspruch 10, **dadurch gekennzeichnet, dass** eine erste Scheiben-Diode (14) an einer festen ersten Keilfläche anliegt, dass eine zweite Scheiben-Diode (15) an einer insbesondere festen zweiten Keilfläche anliegt, und dass zwischen den Scheiben-Dioden (14, 15) ein insbesondere verschiebbarer oder spannbarer Keil (18) vorgesehen ist.

12. Transformator nach Anspruch 1 oder einem der weiteren Ansprüche, **dadurch gekennzeichnet, dass** freie Enden (46) der beiden mittleren Schenkel (43) der beiden Blöcke (11, 12) mit je einer Diode (14, 15) elektrisch verbunden sind, während die äußeren Schenkel (44, 45) beider Blöcke (11, 12) elektrisch zusammengeführt sind zu einer Mittelanzapfung (60).

13. Schweißzange mit einem Trafo nach Anspruch 1 oder einem der voranstehenden Ansprüche.

14. Widerstandsschweißgerät mit einer Schweißzange nach Anspruch 13.

## Claims

1. Transformer (10), in particular for welding tongs of a resistance welding device, witch a primary winding (62), a secondary winding (61) and a core (21), having the following features:
a) in order to form the secondary winding (61), at least one block (11, 12) of conductive material is provided,
b) the block (11, 12) has a cutout (26 to 29) or recess for receiving the primary winding (62),
c) the block (11, 12) has an opening (34 to 37) for receiving at least a portion of the core (21),
d) in order to form the secondary winding (61), at least one further block (11, 12) is provided, such that at least one first and one second block (11, 12) are provided, in each case to form one or more secondary part-windings (22 to 25) and to receive one or more primary part-windings (30 to 33),
**characterized by** the hollowing features:
e) two substantially E-shaped blocks (11, 12) are arranged next to one another, wherein limbs (43 to 45) of the first block (11) are directed parallel and in the opposite direction to limbs (43 to 45) of the second block (12),
f) an outer limb (44, 45) of the first block (11) is electrically connected to the outer limb (44, 45), adjacent thereto, of the second block (12), while the other outer limb of the first block (11) is electrically connected to the other outer limb of the second block (12), and while the central limb (43) of the first block (11) is electrically separated from the central limb (43) of the second block (12),
g) the outer limbs (44, 45) of the first block (11) bear against the outer limbs (44, 45) of the second block (12), wherein the central limbs (43) are spaced apart from one another, and also from the bases (42) which connect the limbs (43 to 45) together.

2. Transformer according to Claim 1, **characterized in that** the cutout (26 to 29) for the primary winding (62) forms an annular well.

3. Transformer according to Claim 1 or 2, **characterized in that** the block (11, 12) is manufactured from aluminium or an aluminium alloy, preferably by milling.

4. Transformer according to Claims 1 or one of the other claims, **characterized in that** the first and/or the second block (11, 12) each form two secondary part-winding (22 to 25) which are preferably connected in parallel.

5. Transformer according to Claim 4, **characterized in that** each secondary part-winding (22 to 25) exhibits one turn or less, in particular approximately a three-quarter turn or less.

6. Transformer according to Claim 1 or one of the other claims, **characterized in that** the two blocks (11, 12) have cooling ducts (63 to 66) in particular for water cooling.

7. Transformer according to Claim 1 or one of the other claims, **characterized in that** the two blocks (11, 12) bear against one another in the region of cooling ducts (63 to 66) such that duct connections exist.

8. Transformer according to Claim 1 or one of the other claims, **characterized in that** an O-shape or rectangular cut strip-wound core is provided as the core (21).

9. Transformer according to Claim 1 or one of the other claims, **characterized in that** each block (11, 12) forms two secondary part-windings (22 to 25) and receivers two primary part-windings (30 to 33).

10. Transformer according to Claim 1 or one of the other claims, **characterized by** secondary-side disc diodes (14, 15) which are held between wedge faces.

11. Transformer according to Claim 10, **characterized in that** a first disc diode (14) bears against a fixed first wedge face, **in that** a second disc diode (15) bears against an in particular fixed second wedge face, and **in that** an in particular displaceable or clampable wedge (18) is provided between the disc diodes (14, 15).

12. Transformer according to Claim 1 or one of the other claims, **characterized in that** free ends (46) of the two central limbs (43) of the two blocks (11, 12) are respectively electrically connected to a diode (14, 15), while the outer limbs (44, 45) of the two blocks (11, 12) are electrically combined to form a central tap (60).

13. Welding tongs having a transformer according to Claim 1 or one of the preceding claims.

14. Resistance welding device having welding tongs according to Claim 13.

## Revendications

1. Transformateur (10), en particulier pour une pince de soudage d'un appareil de soudage par résistante, avec un enroulement primaire (62), un enroulement secondaire (61) et un noyau (21), avec les caractéristiques suivantes :
a) au moins un bloc (11, 12) en matériau conducteur est prévu pour la formation de l'enroulement secondaire (61),
b) le bloc (11, 12) présente un évidement (26 à 29) ou un creux pour la réception de l'enroulement primaire (62),
c) le bloc (11, 12) présente une ouverture (34 à 37) pour la réception d'au moins une section du noyau (21),
d) au moins un autre bloc (11, 12) est prévu pour la formation de l'enroulement secondaire (61), si bien qu'au moins un premier et un deuxième bloc (11, 12) sont présents, respectivement pour la formation d'un ou plusieurs enroulements partiels secondaires (22 à 25) et pour la réception d'un ou plusieurs enroulements partiels primaires (30 à 33),
**caractérisé par** les caractéristiques suivantes :
e) deux blocs sensiblement en forme de E (11, 12) sont agencées de manière adjacente l'un à l'autre, dans lequel des branches (43 à 45) du premier bloc (11) sont orientées de manière parallèle et opposée à des branches (43 à 45) du deuxième bloc (12),
f) une branche extérieure (44, 45) du premier bloc (11) est reliée électriquement à la branche extérieure (44, 45) adjacente à celle-ci du deuxième bloc (12), pendant que l'autre branche extérieure du premier bloc (11) est reliée électriquement à l'autre branche extérieure du deuxième bloc (12), et pendant que la branche médiane (43) du premier bloc (11) est séparée électriquement de la branche médiane (43) du deuxième bloc (12),
g) les branches extérieures (44, 45) du premier bloc (11) s'appliquent contre les branches extérieures (44, 45) du deuxième bloc (12), dans lequel les branches médianes (43) présentent une distance l'une par rapport à l'autre, de même par rapport aux bases (42), lesquelles relient l'une à l'autre les branches (43 à 45).

2. Transformateur selon la revendication 1, **caractérisé en ce que** l'évidement (26 à 29) pour l'enroulement primaire (62) forme une cuve annulaire.

3. Transformateur selon la revendication 1 ou 2, **caractérisé en ce que** le bloc (11, 12) est fabriqué en aluminium ou en un alliage d'aluminium, de préférence fraisé.

4. Transformateur selon la revendication 1 ou l'une quelconque des autres revendications, **caractérisé en ce que** le premier et/ou le deuxième bloc (11, 12) forment respectivement deux enroulements partiels secondaires (22 à 25), lesquels sont connectés de préférence en parallèle.

5. Transformateur selon la revendication 4, **caractérisé en ce que** chaque enroulement partiel secondaire (22 à 25) présente une spire ou moins, en particulier environ trois quarts de spire ou moins.

6. Transformateur selon la revendication 1 ou l'une quelconque des autres revendications, **caractérisé en ce que** les deux blocs (11, 12) présentent des canaux de refroidissement (63 à 66) en particulier pour un refroidissement d'eau.

7. Transformateur selon la revendication 1 ou l'une quelconque des autres revendications, **caractérisé en ce que** les deux blocs (11, 12) s'appliquent l'un contre l'autre au niveau de canaux de refroidissement (63 à 66), si bien qu'il y a des liaisons de canaux.

8. Transformateur selon la revendication 1 ou l'une quelconque des autres revendications, **caractérisé en ce qu'**un noyau enroulé fendu en forme de O ou de forme rectangulaire est prévu en tant que noyau (21).

9. Transformateur selon la revendication 1 ou l'une quelconque des autres revendications, **caractérisé en ce que** chaque bloc (11, 12) forme deux enroulements partiels secondaires (22 à 25) et reçoit deux enroulements partiels primaires (30 à 33).

10. Transformateur selon la revendication 1 ou l'une quelconque des autres revendications, **caractérisé par** des diodes disques côté secondaire (14, 15), lesquelles sont maintenues entre des surfaces de cale.

11. Transformateur selon la revendication 10, **caractérisé en ce qu'**une première diode disque (14) s'applique contre une première surface de cale fixe, qu'une deuxième diode disque (15) s'applique contre une deuxième surface de cale en particulier fixe, et qu'une cale (18) en particulier coulissante ou pouvant être serrée est prévue entre les diodes disques (14, 15).

12. Transformateur selon la revendication 1 ou l'une quelconque des autres revendications, **caractérisé en ce que** des extrémités libres (46) des deux branches médianes (43) des deux blocs (11, 12) sont reliées électriquement à respectivement une diode (14, 15), pendant que les branches extérieures (44, 45) des deux blocs (11, 12) sont regroupées électriquement en une prise médiane (60).

13. Pince de soudage avec un transformateur selon la revendication 1 ou l'une quelconque des revendications précédentes.

14. Appareil de soudage par résistance avec une pince de soudage selon la revendication 13.
